# EUROPEAN PATENT SPECIFICATION

(11) **EP 4 044 961 B1**
(45) Date of publication and mention of the grant of the patent: **28.02.2024**
(21) Application number: 20789430.4
(22) Date of filing: 15.10.2020
(51) Int. Cl.: A61C 13/00, B33Y 10/00, B33Y 80/00

(54) **PROCESS FOR MANUFACTURING BIOMEDICAL COMPONENTS AND PRODUCT OBTAINED BY WAY OF THIS PROCESS**
VERFAHREN ZUR HERSTELLUNG VON BIOMEDIZINISCHEN KOMPONENTEN UND NACH DIESEM VERFAHREN HERGESTELLTES PRODUKT
PROCÉDÉ DE FABRICATION DE COMPOSANTS BIOMÉDICAUX ET PRODUIT AINSI OBTENU

(30) Priority: 17.10.2019 IT 201900019118
(43) Date of publication of application: 24.08.2022
(73) Proprietor: Quartex Informatica S.A.S. Di Tamburrino Igor & C., 20124 Milano (IT)
(72) Inventor: TAMBURRINO, Igor, 20124 Milano (IT)
(74) Representative: Longoni, Alessandra
(86) International application number: PCT/EP2020/078988
(87) International publication number: WO 2021/074268

(56) References cited:
- DE-A1-102012 201 744
- DE-U1-202013 103 515
- US-A1- 2003 132 539
- US-A1- 2008 070 186

## Description

### Technical Field

The present invention relates, in general, to a process for manucturing biomedical components or models for biomedical use as well as to the product obtained by way of this process.

In particular, the present invention relates to a process for manufacturing components for dental use such as for example dental prostheses of various dimensions to which reference is preferably provided hereinafter.

### Background Art

Documents in the art are exemplified by US 2003/132539 A1 and DE 10 2012 201744 A1.

In general, processes are known for manufacturing biomedical components of various types, for example components for dental use such as single or multiple dental elements, implantable components, prostheses, models, surgical templates, etc.

In particular, processes are known in which the manufacturing of individual components is carried out by way of additive technologies.

A typical example of an additive process comprises the following steps:
- an initial step wherein the component is designed by way of a system comprising Computer Aided Design (CAD) software packages or by way of a CAD system. In this step, it is provided that a data file, for example of the STL type, is generated at the output, comprising the data relating to the component to be manufactured;
- a second step, immediately following the initial step, wherein the design data are processed by way of a computerized system or CAM system or even by way of an Additive Manufacturing AM system or AM system comprising, for instance, Slicing Software packages. In this step, a data file is
generated which is suitable for controlling a manufacturing machine comprising, for example, a 3D printer.

The known process allows the manufacturing of individual biomedical components, for example by an addition process on a plate.

A problem of this process is provided by the materials used and by the material transformation inherent in the 3D printing process (i.e. from the liquid state to the solid state or from powder to the solid state); indeed the process is particularly sensitive to a plurality of variables such as: light, temperature, humidity, etc. which affect the accuracy of the manufactured component.

A further problem of this process is that, in order to effectively use the biomedical components, it is necessary to use high-precision 3D printers as it is impossible to rectify the components thus manufactured in a simple and automatic way.

Processes are also known wherein the manufacturing of the individual components is carried out by way of subtractive technologies.

A typical example of this process comprises the following steps:
- an initial step carried out by way of a CAD system equivalent to that described above for the additive process;
- a second step, immediately following the initial step, in which the design data are processed by way of a system comprising Computer Aided Manufacturing (CAM) software packages.

In this step, a data file is generated which is suitable for controlling a manufacturing machine comprising, for example, a precision milling machine;
- a third step in which the milling machine, by way of the data file generated in the second step, realizes one or more components by obtaining them from a cylindrical wafer or plate made of biomedical material.

A problem of this type of process is that all the material used in the milling machine is a biomedical material, i.e. valuable material, and that a large part of this valuable material is removed from the plate with considerable waste of material as well as with consumption of time due to the need to obtain the component from the wafer or, in other words, from the complete wafer.

In summary, the known processes are either too critical to allow the desired quality to be achieved, in terms of precision, or are such to provide a high quantity of valuable material waste, in the form of scraps and unused portions of the wafer, and to require long manufacturing times.

Applicant, in general, has noted that the known art, relating to the manufacturing processes of biomedical components, does not effectively solve the aforementioned problems.

### Disclosure of the Invention

The object of the present invention is thus an overall process that allows to solve the technical problems described above.

Such an object is achieved by way of the process for the manufacturing of biomedical components as claimed in claim 1.

The present invention also relates to the products obtained by way of the process of the invention. Such a product is claimed in claim 6.

The claims as published form an integral part of the technical teaching provided herein regarding the invention.

The following summary of the invention is provided in order to provide a basic understanding of some aspects and features of the invention.

This summary is not an extensive overview of the invention, and as such it is not intended to particularly identify key or critical elements of the invention, or to delineate the scope of the invention. Its sole purpose is to present some concepts of the invention in a simplified form as a prelude to the more detailed description that is presented below.

According to a feature of a preferred embodiment, a process is described wherein for the manufacturing of biomedical components an additive process and a subtractive process are combined in the overall process.

According to a further feature of the present invention, the additive process preferably provides for the manufacturing of an insert with a standard perimeter by way of a 3D printer and the subtractive process provides to mill the product resulting from the union in a standardized object of a semi-pod and of the insert manufactured by way of the 3D printer.

### Brief Description of Drawings

These and further features and advantages of the present invention will appear more clearly from the following detailed description of preferred embodiments, provided by way of non-limiting examples with reference to the attached drawings, in which components designated by same or similar reference numerals indicate components having same or similar functionality and construction and wherein:
Fig. 1 schematically shows a wafer or plate intended to be processed by a dental milling machine according to the known art;
Fig. 2 shows an example of a semi-pod provided in accordance with a preferred embodiment;
Fig. 3 and Fig. 4 show in a perspective and plan view an example of an insert provided according to the preferred embodiment; and
Fig. 5 shows in a perspective view a composite entire wafer or product according to the preferred embodiment.

Applicant clarifies that, in the present disclosure, terms like upper and lower, longitudinal, orthogonal, lateral, up, down, ecc. are used in their conventional meaning unless otherwise suggested.

### Best Modes for Carrying Out the Invention

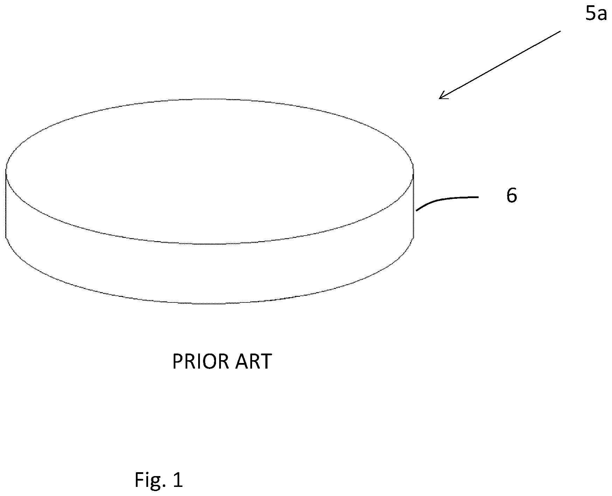

With reference to Fig. 1, an entire wafer 5a, provided in accordance with the known art, is shown to be used on a 4 or 5 axis reworking milling machine of known type.

According to the known art, the dental milling machines, to which reference is made here, are suitable for treating cylindrical entire or complete pods 5a with a full or hollow contour 6 and with standardized dimensions, for example a diameter of 98 mm and a variable height included, preferably , among 10 and 30 mm.

The standardized dimensions of the pods allow that the entire pods 5a be mounted on the milling machine so that the same milling machine can manufacture or rectify any biomedical component by operating on opposite faces of the entire pod 5a.

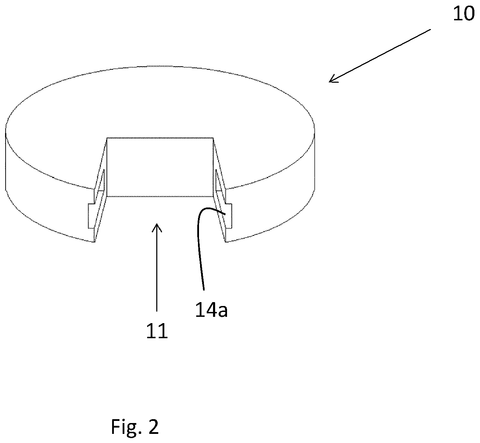

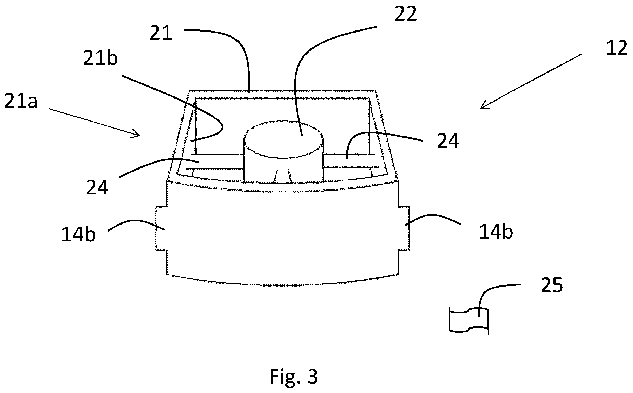

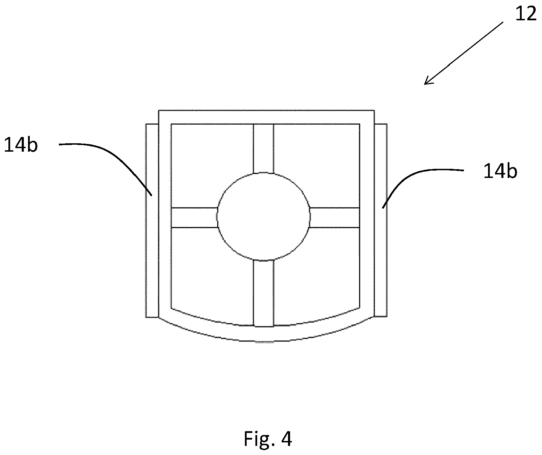

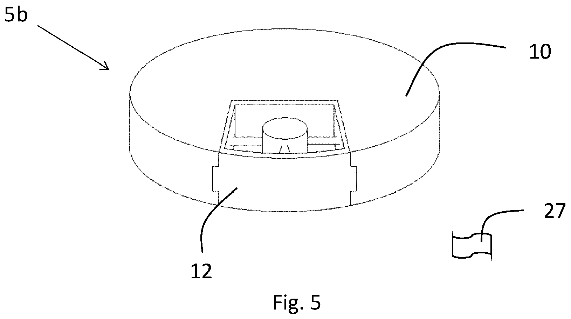

As shown in Figures 2-5, according to the present embodiment, semi-pods or partialized pods 10 are provided, cutted so as to comprise, each in the cutted part, at least one housing 11 in which it is possible to insert, to size, a respective insert or inlay 12 made, for example, by way of a 3D printer.

According to the present embodiment, the term product means the intermediate product comprising the semi-pod or the partialized pod 10 and at least one insert 12.

This product provides a composite entire wafer 5b suitable to be processed by a milling machine, for example by a dental CNC milling machine such as the DWX-52D model of the ROLAND Company.

It is preferably provided that the partialized-pods 10 have standardized external dimensions, that may comprise housings 11 of variable dimensions, that are not subjected to the milling process and that therefore can be reused several times.

Even more preferably the semi-pods or partialized pods 10 are made, also by casting, of any material, even of low quality, such as for example of plastic, of aluminum, of steel, PMMA, etc.

According to this exemplified embodiment, the insert or inlay 12 is made by way of any 3D printer, even of low quality in terms of precision. For example, in the case of 3D printers for dental use, the insert 12 can be made by way of any type of 3D printer, such as:
- FDM (Fused Deposition Modeling),
- SLA (stereolithography),
- DLP (digital light processing),
- SLS (Selective Laser Sintering),
etc.

Preferably the insert 12 is made by way of any 3D printer by using, preferably, a biomedical material of value, for example in the case of dental use: PMMA for dental crowns and bridges, resins for models, resins for surgical templates, resins for castings, resins for teeth, etc.

Preferably, the housing 11 of the semi-pod 10 is configured in such a way as to be able to house, to size, by way of lateral guides 14a, preferably parallel each other, the insert 12 which comprises, in the preferred embodiment, lateral guides 14b which mirror the lateral guides 14a of the housing 11.

According to other embodiments, the lateral guides can be replaced by way of fixing screws passing through the partialized pod 10.

According to the preferred embodiment, each insert 12, once inserted into the housing 11, is able to complete, at least externally, the cylindrical shape of a standardized composite entire wafer 5b so that it can be mounted on the milling machine, for example a CNC precision dental milling machine. Preferably, the inserts 12 can have different sizes corresponding to respective different sizes of the housings 11.

According to the embodiment described, the insert 12 is made by growth, for example with a 3D printer model 4D made by the Applicant Company, and comprises an external perimeter 21 comprising external walls 21a configured so as to correspond to the perimeter of the housing 11 and to be inserted by way of the guides 14b into the guides 14a of the housing 11. In particular, according to the present embodiment, it is provided that the insert 12 comprises, on an internal wall 21b of the external perimeter 21 at least one biomedical component or model 22, for example a dental prosthesis, fixed to the internal wall 21b by way of suitable links or peduncles 24.

According to possible further embodiments, it is provided that the inserts can have a surface of any form even with non-parallel guides.

For example, the inserts may have the surface with the form of an arc, of a circle or of a truncated circle provided that, in use, the inserts can be inserted to size in respective housings having a mirror form.

According to the various embodiments, the inserts can have variable dimensions so as to be optimized for the type and size of the at least one biomedical component to be manufactured.

As easily understandable by a person skilled in the art and anticipated above, the inserts can be made by way of 3D printers of any type.

According to the preferred embodiment, the process for realazing biomedical components or models 22, such as for example dental prostheses or dental models, comprises the following steps:
- a first preliminary step in which semi-pods 10 are provided comprising respective housings 11 of different sizes;
- a second preliminary step in which the biomedical component is designed, for example by way of a CAD system, and in which a CAD data file is generated, for example of the STL type, relating to the component to be manufactured;
- a first effective step of the process according to the present embodiment in which, for example, the CAD data file is processed by an operator by way of a computerized system or CAM system or Additive Manufacturing system comprising Computer Aided Manufacturing (CAM) software packages and/or Slicing Software packages. This first step comprises, according to the preferred embodiment, the sub-steps of:
- insert at least one component 22 to be realized in the external perimeter 21 of an insert 12 compatible with the dimensions of a certain housing 11;
- print by way of a first file 25 or of a file for a 3D printer the insert 12 which comprises, in particular, the external perimeter 21, the at least one biomedical component 22 and the links 24 for attaching the at least one component 22 to the internal wall 21b of the perimeter 21;
- mill the insert 12, inserted into the semi-pod 10, by way of a second file 27 or of a milling machine file, for example configured for a reworking milling machine, so as to provide to the component dimensions with the desired precision and so as to detach, at least partially, the component from the insert.

In use, the computerized system or CAM system is expected to be configured to generate the first file 25 to create the insert 12 comprising its parts by way of the 3D printer and to generate the second file 27 to perform the reworking milling by way of the milling machine.

In use, it is provided that, after the 3D printing, the insert 12 is inserted by an operator into the housing 11 and that the reworking milling machine refines the precision of the at least one component 22 by operating on both sides of the product or composite entire wafer 5b by way of the second file 27 generated by the CAM system.

Advantageously, thanks to the process hereinbefore disclosed, it is possible to obtain any biomedical component by way of a first additive process and of a second subtractive type reworking process.

Advantageously, the use of valuable material is substantially limited to the perimeter of the insert and to the at least one component comprised in the insert.

Advantageously, the accuracy of the entire process can be left only to the reworking that is carried out, for example, by way of a precision milling machine; indeed, the overall process providing 3D printing and reworking by way of a milling machine is certainly more reliable in terms of quality and precision than a process that uses only a precision 3D printer, for obtaining the same features.

Advantageously, the partialized pods are standard objects that can be used several times because such partialized pods are not subject to consumption.

In summary, the process, according to the shown exemplified construction and variants, allows to:
- use standard partialized pods comprising standardized housings of varying sizes,
- optimize the use of valuable material by limiting it only to inserts of dimensions corresponding to those of the standardized housings, and
- manufacture the desired biomedical components within these inserts, by using additive processes, for example by way of 3D printers.

Advantageously, the biomedical components obtained by way of the disclosed process benefit from the advantages of:
- be manufactured, initially even in a rough way, by way of technologies of additive type and by using a minimum amount of valuable material, and
- be mechanically reworked by way of precision technologies of subtractive type.

Of course, obvious changes and/or variations to the above disclosure are possible, as regards dimensions, shapes, materials and components, as well as details of the disclosed objects and process without departing from the scope of the invention as defined by the claims that follow.

## Claims

1. A process for manufacturing biomedical components (22), in particular components for dental use, comprising the steps of:
- providing a semi-wafer or partialized wafer (10) comprising at least one respective housing (11) configured to accommodate an insert (12) made to size,
- inserting the biomedical component in said insert by way of a computerized system
- realizing by way of a 3D printer the insert (12), said step comprising at least the steps of
- realizing a perimeter (21) of the insert,
- realizing the biomedical component (22) inside said perimeter (21),
- realizing a plurality of links (24) configured to hook the biomedical component (22) to said perimeter (21),
- inserting the insert made to size into the respective housing (11) so as to realize a composite entire wafer or product (5b) of standardized type,
- precision milling the biomedical component (22) comprised in the insert.

2. The process according to claim 1, wherein the step of inserting the biomedical component in said insert by way of a computerized system comprises the steps of:
- generating a first file (25) arranged to realize the insert (12) comprising its parts, in particular by way of the 3D printer, and
- generating a second file (27) to perform the precision milling.

3. The process according to claim 1 or 2, wherein the step of inserting the insert into the respective housing (11) comprises the step of realizing a composite entire wafer (5b) comprising a cylindrical shape.

4. The process according to any one of claims 1 to 3, wherein the step of precision milling the biomedical component (22) comprised in the insert (12) is carried out by way of a precision dental milling machine.

5. The process according to any one of claims 1 to 4, wherein, in a preliminary step, it is provided that
- the biomedical component is designed by way of a CAD system, configured to generate a data file arranged to be processed in the insertion step of the biomedical component in the insert.

6. A product made by way of the process for manufacturing a biomedical component (22) as claimed in claims 1 to 5, the product comprising
- a semi-wafer or partialized wafer (10), said semi-wafer being cutted so as to comprise at least one housing (11),
and being **characterized in that** it comprises
- at least one insert (12) configured to be fitted to size in the housing,
- said at least one insert being made of biomedical material and comprising
- an external perimeter (21) configured so as to be fitted to size in the housing (11),
- the biomedical component (22),
- a plurality of links configured to hook the biomedical component (22) to the external perimeter (21),
whereby said semi-wafer (10) and said insert (12), in use, are configured so as to realize the product shaped as a composite entire wafer (5b) of standardized type arranged to be mounted on a precision dental milling machine.

7. The product according to claim 6, wherein said housing (11) of said semi-wafer (10) comprises first lateral guides (14a) and said insert (12) comprises second lateral guides (14b) mirroring said first lateral guides and configured to cooperate with said first lateral guides so as to realize said composite entire wafer (5b).

8. The product according to claim 6 or 7, wherein said composite entire wafer (5b) comprises a cylindrical shape.

9. The product according to any one of claims 6 to 8, wherein said biomedical material of said insert (12) is comprised in a group of materials for dental use such as:
PMMA for dental crowns and bridges,
resins for models,
resins for surgical guides,
resins for models,
resins for set of teeth.

## Patentansprüche

1. Verfahren zur Herstellung von biomedizinischen Komponenten (22), insbesondere von Komponenten für zahnärztliche Anwendung, umfassend die folgenden Schritte:
- Bereitstellen eines Halbwafers oder partiellen Wafers (10), umfassend mindestens ein jeweiliges Gehäuse (11), das konfiguriert ist, um einen maßgefertigten Einsatz (12) aufzunehmen,
- Einsetzen der biomedizinischen Komponente in den Einsatz mittels eines computergestützten Systems,
- Realisieren des Einsatzes (12) mittels eines 3D-Druckers, der Schritt umfassend mindestens die folgenden Schritte
- Realisieren eines Umfangs (21) des Einsatzes,
- Realisieren der biomedizinischen Komponente (22) innerhalb des genannten Umfangs (21),
- Realisieren einer Vielzahl von Verbindungsgliedern (24), die konfiguriert sind, um die biomedizinische Komponente (22) an dem Umfang (21) einzuhaken,
- Einsetzen des maßgefertigten Einsatzes in das jeweilige Gehäuse (11), um ein gesamte(r) zusammengesetzte(r) Wafer oder Produkt (5b) eines Standardtyps zu realisieren,
- Präzisionsfräsen der biomedizinischen Komponente (22), die in dem Einsatz enthalten ist.

2. Verfahren nach Anspruch 1, wobei der Schritt eines Einsetzens der biomedizinischen Komponente in den Einsatz mittels eines computergestützten Systems die folgenden Schritte umfasst:
- Erzeugen einer ersten Datei (25), die angeordnet ist, um den Einsatz (12) umfassend seine Teile zu realisieren, insbesondere mittels des 3D-Druckers, und
- Erzeugen einer zweiten Datei (27) zum Ausführen des Präzisionsfräsens.

3. Verfahren nach Anspruch 1 oder 2, wobei der Schritt eines Einsetzens des Einsatzes in das jeweilige Gehäuse (11) den Schritt eines Realisierens eines gesamten zusammengesetzten Wafers (5b), umfassend eine zylindrische Form, umfasst.

4. Verfahren nach einem der Ansprüche 1 bis 3, wobei der Schritt des Präzisionsfräsens der biomedizinischen Komponente (22), die in dem Einsatz (12) enthalten ist, mittels einer zahnmedizinischen Präzisionsfräsmaschine durchgeführt wird.

5. Verfahren nach einem der Ansprüche 1 bis 4, wobei in einem vorherigen Schritt bereitgestellt ist, dass
- die biomedizinische Komponente mittels eines CAD-Systems konstruiert wird, das konfiguriert ist, um eine Datei zu erzeugen, die angeordnet ist, um in dem Schritt eines Einsetzens der biomedizinischen Komponente in den Einsatz verarbeitet zu werden.

6. Produkt, hergestellt nach dem Verfahren zur Herstellung einer biomedizinischen Komponente (22) nach einem der Ansprüche 1 bis 5, das Produkt umfassend
- einen Halbwafer oder partiellen Wafer (10), wobei der Halbwafer geschnitten ist, um mindestens ein Gehäuse (11) zu umfassen,
und **dadurch gekennzeichnet ist, dass** er Folgendes umfasst
- mindestens einen Einsatz (12), der konfiguriert ist, um in das Gehäuse eingepasst zu werden,
- wobei der mindestens eine Einsatz aus biomedizinischem Material gefertigt ist und Folgendes umfasst
- einen äußeren Umfang (21), der konfiguriert ist, um in das Gehäuse (11) eingepasst zu werden,
- die biomedizinische Komponente (22),
- eine Vielzahl von Verbindungen, die konfiguriert sind, um die biomedizinische Komponente (22) an dem äußeren Umfang (21) einzuhaken,
wobei der Halbwafer (10) und der Einsatz (12) im Gebrauch konfiguriert sind, um das Produkt in Form eines gesamten zusammengesetzten Wafers (5b) von einem Standardtyp zu realisieren, der angeordnet ist, um auf einer zahnmedizinischen Präzisionsfräsmaschine montiert zu werden.

7. Produkt nach Anspruch 6, wobei das Gehäuse (11) des Halbwafers (10) erste seitliche Führungen (14a) umfasst und der Einsatz (12) zweite seitliche Führungen (14b) umfasst, die die ersten seitlichen Führungen spiegeln und konfiguriert sind, um mit den ersten seitlichen Führungen zusammenzuwirken, um den gesamten zusammengesetzten Wafer (5b) zu realisieren.

8. Produkt nach Anspruch 6 oder 7, wobei der gesamte zusammengesetzte Wafer (5b) eine zylindrische Form umfasst.

9. Produkt nach einem der Ansprüche 6 bis 8, wobei das biomedizinische Material des Einsatzes (12) zu einer Gruppe von Materialien für die zahnmedizinische Verwendung gehört, wie z. B.:
PMMA für Zahnkronen und -brücken,
Kunstharze für Modelle,
Kunstharze für chirurgische Führungen,
Kunstharze für Modelle,
Kunstharze für Gebisse.

## Revendications

1. Procédé de fabrication d'un composant biomédical (22), en particulier de composants à usage dentaire, comprenant les étapes de :
- fourniture d'une demi-tranche ou tranche partialisée (10) comprenant au moins un logement respectif (11) conçu pour recevoir un insert (12) réalisé sur mesure,
- insertion du composant biomédical dans ledit insert au moyen d'un système informatisé
- réalisation au moyen d'une imprimante 3D de l'insert (12), ladite étape comprenant au moins les étapes de
- réalisation d'un périmètre (21) de l'insert,
- réalisation du composant biomédical (22) à l'intérieur dudit périmètre (21),
- réalisation d'une pluralité de liaisons (24) conçues pour accrocher le composant biomédical (22) audit périmètre (21),
- insertion de l'insert réalisé sur mesure dans le logement respectif (11) de manière à réaliser une tranche entière ou un produit composite (5b) de type normalisé,
- fraisage de précision du composant biomédical (22) compris dans l'insert.

2. Procédé selon la revendication 1, ladite étape d'insertion du composant biomédical dans ledit insert au moyen d'un système informatisé comprend les étapes de :
- génération d'un premier fichier (25) agencé pour réaliser l'insert (12) comprenant ses parties, en particulier au moyen de l'imprimante 3D, et
- génération d'un second fichier (27) pour effectuer le fraisage de précision.

3. Procédé selon la revendication 1 ou 2, ladite étape d'insertion de l'insert dans le logement respectif (11) comprenant l'étape de réalisation d'une tranche entière composite (5b) comprenant une forme cylindrique.

4. Procédé selon l'une quelconque des revendications 1 à 3, ladite étape de fraisage de précision du composant biomédical (22) compris dans l'insert (12) étant réalisée au moyen d'une machine de fraisage dentaire de précision.

5. Procédé selon l'une quelconque des revendications 1 à 4, dans lequel, dans une étape préliminaire, il est prévu que
- le composant biomédical soit élaboré au moyen d'un système de CAO, conçu pour générer un fichier de données agencé pour être traité lors de l'étape d'insertion du composant biomédical dans l'insert.

6. Produit fabriqué au moyen du procédé de fabrication d'un composant biomédical (22) selon les revendications 1 à 5, le produit comprenant
- une demi-tranche ou tranche partialisée (10), ladite demi-tranche étant découpée de manière à comprendre au moins un logement (11),
et étant **caractérisée en ce qu'**elle comprend
- au moins un insert (12) conçu pour être ajusté sur mesure dans le logement,
- ledit au moins un insert étant constitué d'un matériau biomédical et comprenant
- un périmètre externe (21) conçu pour être ajusté sur mesure dans le logement (11),
- le composant biomédical (22),
- une pluralité de liaisons conçues pour accrocher le composant biomédical (22) au périmètre externe (21),
grâce à quoi ladite demi-tranche (10) et ledit insert (12), lors de l'utilisation, sont conçus de manière à réaliser le produit façonné sous la forme d'une tranche entière composite (5b) de type normalisé agencée pour être montée sur une machine de fraisage dentaire de précision.

7. Produit selon la revendication 6, ledit logement (11) de ladite demi-tranche (10) comprenant des premiers guides latéraux (14a) et ledit insert (12) comprenant des seconds guides latéraux (14b) en miroir par rapport auxdits premiers guides latéraux et conçus pour coopérer avec lesdits premiers guides latéraux de manière à réaliser ladite tranche entière composite (5b).

8. Produit selon la revendication 6 ou 7, ladite tranche entière composite (5b) comprenant une forme cylindrique.

9. Produit selon l'une quelconque des revendications 6 à 8, ledit matériau biomédical dudit insert (12) étant compris dans un groupe de matériaux à usage dentaire tel que :
le PMMA pour les couronnes et ponts dentaires,
les résines pour les modèles,
les résines pour les guides chirurgicaux,
les résines pour les modèles,
les résines pour les séries de dents.
